# EUROPEAN PATENT SPECIFICATION

(11) **EP 2 917 569 B1**
(45) Date of publication and mention of the grant of the patent: **19.10.2016**
(21) Application number: 13821966.2
(22) Date of filing: 23.10.2013
(51) Int. Cl.: F03D 1/06

(54) **WIND TURBINE AERODYNAMIC ROTOR BLADE APPENDIX AND WIND TURBINE BLADE PROVIDED WITH SUCH AN AERODYNAMIC APPENDIX**
AERODYNAMISCHES ANBAUTEIL EINES WINDTURBINENROTORBLATTS UND WINDTURBINENROTORBLATT MIT SOLCH EINEM AERODYNAMISCHEN ANBAUTEIL
APPENDICE DE PALE DE ROTOR AÉRODYNAMIQUE DE TURBINE ÉOLIENNE ET PALE DE TURBINE ÉOLIENNE DOTÉE D'UN TEL APPENDICE AÉRODYNAMIQUE

(30) Priority: 23.10.2012 IT MI20121797
(43) Date of publication of application: 16.09.2015
(73) Proprietor: WINDFIN B.V., 2451 VW Leimuiden (NL)
(72) Inventor: ROCHHOLZ, Hermann, 39100 Bolzano (IT)
(74) Representative: Eccetto, Mauro
(86) International application number: PCT/IB2013/059584
(87) International publication number: WO 2014/064626

(56) References cited:
- EP-A1- 2 107 235
- WO-A2-2010/133649
- US-A- 2 135 887
- US-A1- 2012 051 936

## Description

### TECHNICAL FIELD

The present invention relates to a wind turbine aerodynamic rotor blade appendix.

More specifically, the present invention relates to an aerodynamic appendix for a blade extending along a given axis, between a root and a tip, and comprising an outer portion with an airfoil having a leading edge and a trailing edge; a substantially cylindrical inner portion; and an intermediate portion between the inner and outer portions and shaped to form a transition between the airfoil and the substantially cylindrical-inner portion. In other words, the intermediate portion starts outlining the airfoil.

### BACKGROUND ART

Because the inner and intermediate portions of the blade extract little energy from the wind impinging on them, they are fitted with an aerodynamic appendix, which normally comprises a further trailing edge, a further pressure side, and a further suction side. Examples of aerodynamic appendices are disclosed in documents US 7,946,803, US 2012/0051936, US 2011/0229332, US 2011/0020128 or WO 2010/133649. Aerodynamic appendix serves to increase the useful surface of the blade and the efficiency of the wind turbine and to change the lift distribution of the blade so as to prevent aerodynamic stall in blade root region. The design of blades with no aerodynamic appendixes is a trade-off between the capacity to convert the kinetic energy of the wind into kinetic energy to rotate the blade assembly, and the need to provide the blades with adequate structural resistance to stress. The inner portion terminates with a root, which is mounted to a hub and rotates selectively with respect to the hub to adjust the blade pitch angle.

Known aerodynamic appendixes are invariably large, heavy, and relatively expensive.

### DISCLOSURE OF INVENTION

It is an object of the present invention to provide an aerodynamic appendix designed to considerably increase wind turbine efficiency, and which is relatively cheap, lightweight and compact.

According to the present invention, there is provided a wind turbine blade aerodynamic appendix, wherein the blade comprises an outer portion with an airfoil having a leading edge, a trailing edge, a pressure side, and a suction side; a substantially cylindrical inner portion; and an intermediate portion between the outer portion and the inner portion and shaped to form a transition between the airfoil and the substantially cylindrical inner portion ("blade root"; the aerodynamic appendix being located at the inner portion and the intermediate portion, and comprising a further trailing edge, a further pressure side, a further suction side, and at least one duct connecting the further pressure side fluidically to the further suction side.

The present invention provides for producing stable flow on the further suction side, even with a relatively thin, and therefore lightweight, easy-to handle, low-cost, aerodynamic appendix.

In a preferred embodiment of the invention, the further pressure side is designed to blend with the pressure side of the blade.

This solution optimizes flow along the pressure side and accelerates flow through the duct to load the rearward portion of the aerodynamic appendix

This solution serves to keep flow attached allowing more lift onto aerodynamic appendix.

In a preferred embodiment of the invention, the duct is located at the opposite end to the further trailing edge.

This location makes better use of the extension of the further suction side.

In a preferred embodiment of the invention, the duct is designed to divide the flow cooperating with the pressure side of the blade into a flow along the duct and cooperating with the further suction side; and a flow continuing along the further pressure side of the aerodynamic appendix.

The duct preferably tapers in cross section towards the further suction side..

This design serves to keep flow attached allowing more lift onto aerodynamic appendix.

The aerodynamic appendix preferably comprises at least one vortex generator inside the duct.

The vortex generator stabilizes flow along the further suction side.

In an alternative embodiment of the invention, the aerodynamic appendix comprises a further duct arranged in series with the duct.

The further duct serves additionally to keep flow attached allowing more lift onto the rearward portion of further aerodynamic appendix.

The further duct preferably tapers in cross section towards the further suction side.

The preferred cross sectional shape of the further duct also tapers in the flow direction to keep flow attached allowing more lift onto the rearward portion of the aerodynamic appendix.

The further duct is preferably designed to divide the flow cooperating with the further pressure side into a flow along the further duct and cooperating with the further suction side downstream from the further duct, and a flow continuing along the further pressure side.

The aerodynamic appendix preferably has a plurality of further ducts arranged in parallel.

The further ducts arranged in parallel, in effect, serve to define the equivalent of one long slit, which is practically unfeasible for structural reasons.

The aerodynamic appendix preferably comprises a plurality of ducts arranged in parallel in flow-wise direction.

The aerodynamic appendix preferably has one face complementary with the outer surface of the blade to which the aerodynamic appendix is fixed.

This solution simplifies assembly of the aerodynamic appendix to the blade.

In accordance with a further alternative embodiment the aerodynamic appendix comprises a main body coupled to the blade and at least one flap hinged to the main body. The flap is adjustable for adapting the shape of the appendix to specific needs.

In particular, the flap is hinged about an axis in an adjustable manner.

Conveniently the duct is delimited by the main the body and the at least one flap.

In practice, the aerodynamic appendix may comprise a plurality of flaps hinged to the main body about respective parallel and mutually offset axes and a plurality of ducts, each, delimited by the main body and one of the flaps.

The present invention further relates to a wind turbine blade.

According to the present invention there is provided a wind turbine according to claim 18.

### BRIEF DESCRIPTION OF THE DRAWINGS

A number of non-limiting embodiments of the invention will be described by way of example with reference to the accompanying drawings, in which :
Figure 1 shows a side view, with parts removed for clarity, of a wind turbine with blades equipped with respective aerodynamic appendixes in accordance with the present invention;
Figure 2 shows a larger-scale side view, with parts removed for clarity, of a blade of the Figure 1 wind turbine;
Figure. 3 shows a section, with parts removed for clarity, along line III-III of the Figure 2 blade;
Figure 4 shows a larger-scale section, with parts removed for clarity, of a variation of the aerodynamic appendix in Figures 2 and 3;
Figure 5 shows a larger-scale section, with parts removed for clarity, of a further variation of the aerodynamic appendix in Figures 2 and 3;
Figure 6 shows a larger-scale section, with parts removed for clarity, of a blade aerodynamic appendix, and aerodynamic appendix assembly tool;
Figure 7 shows a side view, with parts removed for clarity, of a blade equipped with an aerodynamic appendix made in accordance with an alternative embodiment of the present invention; and
Figure 8 shows a section, with parts removed for clarity, along line VIII-VIII of the Figure 7 blade.

### BEST MODE FOR CARRYING OUT THE INVENTION

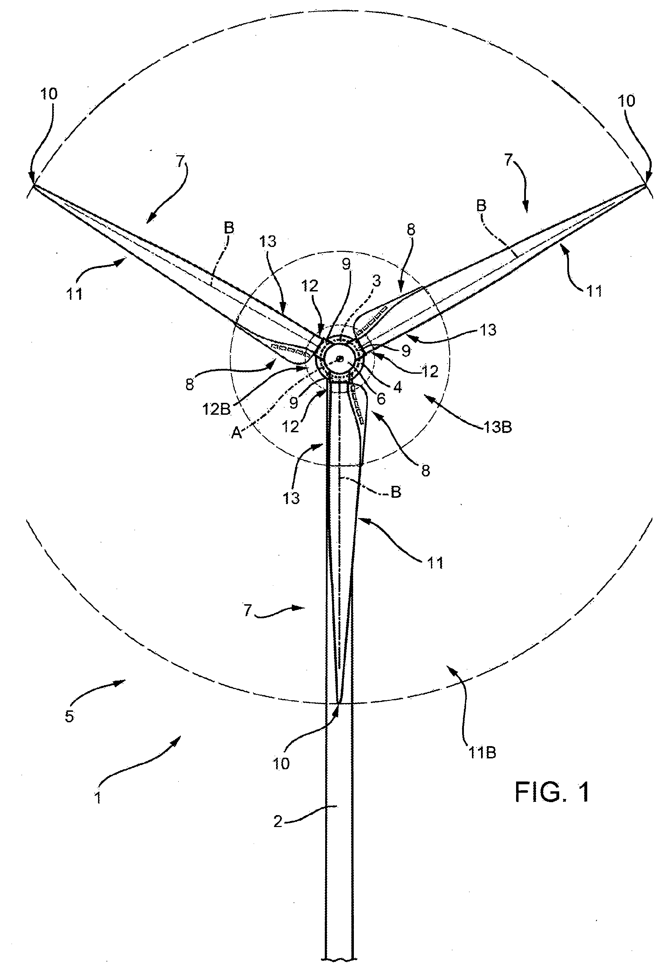

Number 1 in Figure 1 indicates as a whole a horizontal-axis, preferably direct-drive wind turbine for generating electric energy. In the example shown, wind turbine 1 comprises a vertical structure 2; a main frame 3 mounted to rotate on top of vertical structure 2; a rotating electric machine 4; and a blade assembly 5 rotating about an axis of rotation A.

Blade assembly 5 comprises a hub 6 connected to rotating electric machine 4; and a plurality of blades 7, each extending along a longitudinal axis B and fitted to hub 6 to rotate selectively about axis B under the control of a pitch adjusting device (not shown) inside hub 6.

Each blade 7 is fitted with an aerodynamic appendix 8 for increasing the efficiency of wind turbine 1. More specifically, blade assembly 5 comprises three aerodynamic appendixes 8 located close to hub 6 and mounted to respective blades 7. Each blade 7 extends along longitudinal axis B, between a root 9 and a tip 10, and comprises an Outer portion 11 with an airfoil; an inner portion 12 with a substantially circular cross section; and- an intermediate portion 13 between outer portion 11 and inner portion 12, and shaped to define a transition cross section between the airfoil cross section and the substantially circular cross section.

As the blade assembly rotates, outer, inner and intermediate portions 11, 12, 13 define respective concentric rings 11B, 12B, 13B about axis of rotation A.

Aerodynamic appendixes 8 make it possible to exploit the energy of the wind impinging on the ring 12B and 13B areas, which would otherwise be lost or underexploited. Furthermore they change lift distribution in a way that parts outside of 13b can be better exploited.

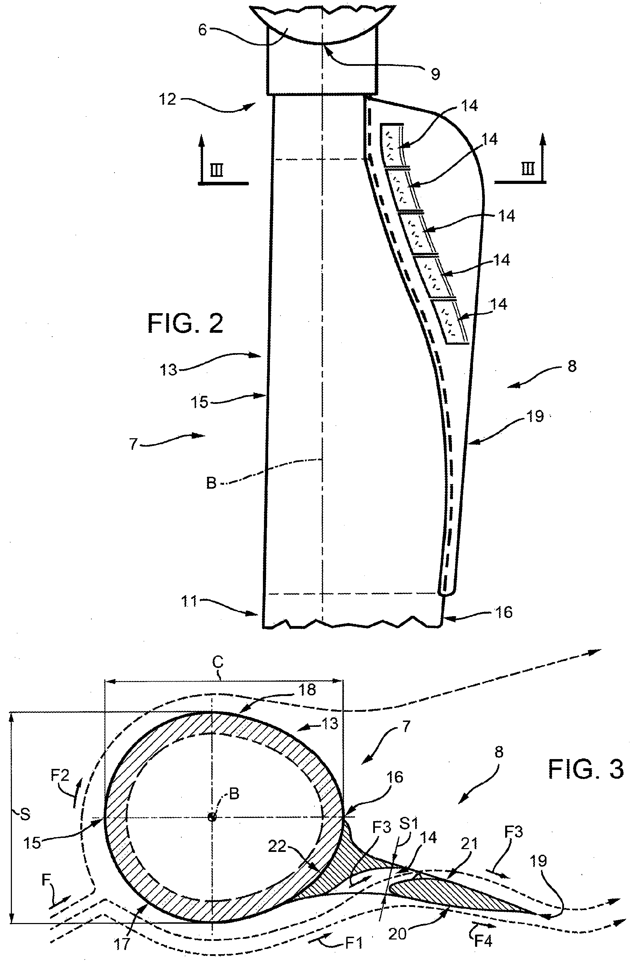

As shown in Figure 2, each aerodynamic appendix 8 is located at portions 12 and 13 to also exploit part of the wind energy close to hub 6, and comprises at least one duct 14. In the example shown, aerodynamic appendix 8 comprises a plurality of ducts 14.

More in detail, the ducts 14 are arranged in parallel in flow-wise direction. The ducts 14 are located along a directrix following the contour of a face 22.

To optimize lift on aerodynamic appendix 8, ducts 14 preferably differ in shape and size, depending on their location along the axis of blade 7.

As shown in Figure 3, the cross section of blade 7 is formed along intermediate portion 13, the cross section of which starts outlining the airfoil, and so comprises a leading edge 15, a trailing edge 16, a pressure side 17, a suction side 18, a chord C and a thickness S, which, in the following description, are used indiscriminately to indicate corresponding elements of both outer portion 11 and intermediate portion 13.

Aerodynamic appendix 8 is located close to the trailing edge 16 of blade 7, preferably along pressure side 17, and comprises a trailing edge 19, a pressure side 20, and a suction side 21.

Aerodynamic appendix 8 is preferably fittable selectively to blade 7, and has a face 22 complementary with the mating area of blade 7.

The thickness S1 of aerodynamic appendix 8 decreases steadily from a maximum thickness S1 at face 22 to a minimum zero thickness S1 at trailing edge 19, and is much less than the thickness S of blade 7.

Pressure side 20 comprises a concave portion connected to pressure side 17 of blade 7; and a convex portion connected to the concave portion and terminating at trailing edge 19.

Suction side 21 comprises a convex portion forming an angle with suction side 18 of blade 7; a concave portion connected to the convex portion; and a further convex portion connected to the concave portion and terminating at trailing edge 19.

Each duct 14 connects pressure side 20 to suction side 21 of aerodynamic appendix 8.

Each duct 14 is located close to face 22, extends away from face 22 in the pressure side 20 to suction side 21 direction.

Each duct 14 preferably decreases in cross section in the flow direction to accelerate flow, i.e. each duct tapers towards suction side 21.

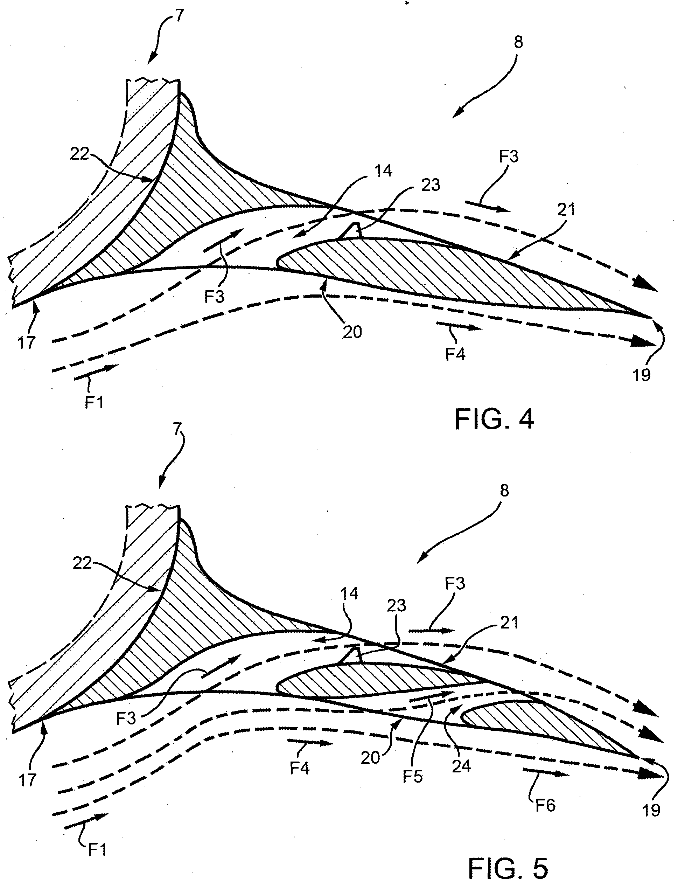

As shown in Figure 4, each duct 14 is preferably fitted inside with vortex generators 23 to stabilize flow of the outflow from duct 14 and increase lift on suction side 21 of aerodynamic appendix 8.

Close to leading edge 15, the airflow F cooperating with blade 7 is divided by blade 7 into a flow F1 along pressure side 17 of blade 7; and a flow F2 substantially along suction side 18 of blade 7. And flow F1 is in turn divided onto a flow F3, which is directed along duct 14 and continues along suction side 21 of aerodynamic appendix 8; and a flow F4, which continues along pressure side 20 of aerodynamic appendix 8. As it flows along duct 14, flow F3 increases in energy, which is later discharged on suction side 21.

Figure 5 shows a variation of aerodynamic appendix 8, which is described below using the same reference numbers as for corresponding parts of the preceding embodiment.

The Figure 5 aerodynamic appendix 8 comprises at least one further duct 24 located in series with duct 14 between duct 14 and trailing edge 19. The mean flow section of duct 24 is smaller than that of duct 14, and the flow section of duct 24 tapers in the pressure side 20 to suction side 21 direction.

In the Figure 5 variation, flow F4 is further divided at duct 24 into a flow F5, which flows along duct 24 and joins up with flow F3 on suction side 21, between duct 24 and trailing edge 19; and a flow F6, which continues along pressure side 20 to trailing edge 19.

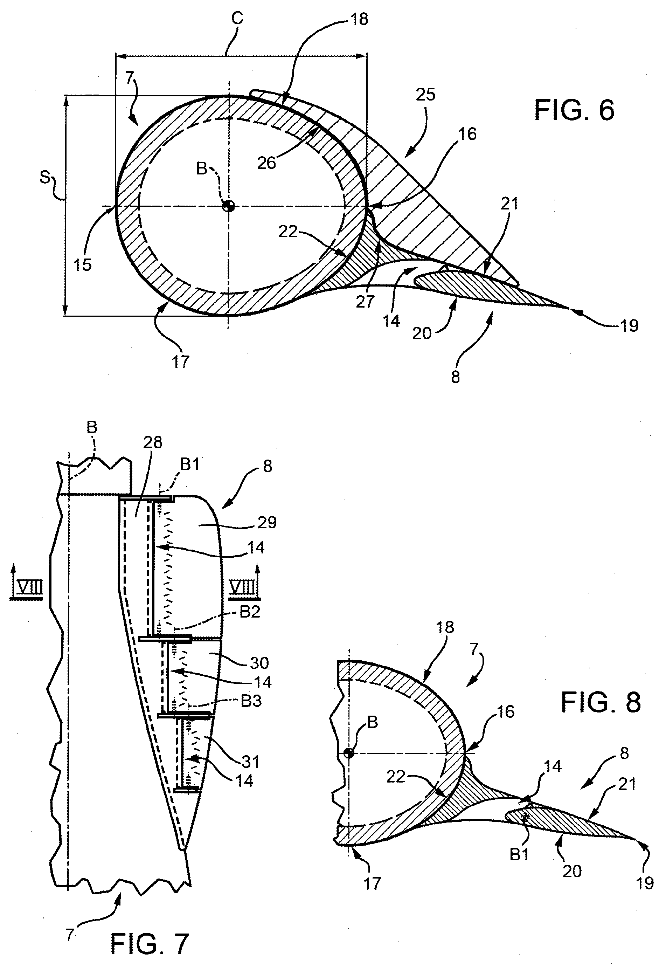

Figure 6 shows assembly of aerodynamic appendix 8 to blade 7. Aerodynamic appendix 8 is positioned correctly using an assembly tool 25 having a face 26 complementary with a portion of suction side 18 of blade 7; and a face 27 complementary with a portion of suction side 21 of aerodynamic appendix 8.

In accordance with the alternative embodiment of figure 7, aerodynamic appendix 8 comprises a main body 28 and flaps 29, 30, and 31 hinged to the main body 28.

Main body 28 is mounted to blade 7, whereas flaps 29, 30 and 31 are hinged about respective parallel and mutually offset axes B1, B2 and B3 parallel to axis B of the blade 7. The positions of flaps 29, 30, 3 31 are adjustable about their axes B1, B2, and B3.

According to this alternative embodiment and as shown in figure 8, the ducts 14 are formed between the main body 28 and the flaps 29, 30, and 31.

The number of adjustable flaps may vary according to the size of the appendix starting form a minimum of one.

Clearly, changes may be made to the aerodynamic appendix according to the present invention without, however, departing from the protective scope of the accompanying Claims.

## Claims

1. A wind turbine blade aerodynamic appendix, wherein the blade (7) comprises an outer portion (11) with an airfoil having a leading edge (15), a trailing edge (16), a pressure side (17), and a suction side (18); a substantially cylindrical inner portion (12); and an intermediate portion (13) between the outer portion (11) and the inner portion (12) and shaped to form a transition between the airfoil and the substantially cylindrical inner portion; the aerodynamic appendix (8) being configured to be located at the inner portion (12) and the intermediate portion (13), and comprising a further trailing edge (19), a further pressure side (20), a further suction side (21), and being **characterized by** comprising at least one duct (14) connecting the further pressure side (20) fluidically to the further suction side (21).

2. An aerodynamic appendix as claimed in Claim 1, wherein the further pressure side (20) is designed to blend with the pressure side (17) of the blade (7).

3. An aerodynamic appendix as claimed in Claim 1 or 2, wherein the further suction side (21) is designed to form an angle with the suction side (18) of the blade (7).

4. An aerodynamic appendix as claimed in any one of the foregoing Claims, wherein the duct (14) is located at the opposite end to the further trailing edge (19).

5. An aerodynamic appendix as claimed in any one of the foregoing Claims, wherein the duct (14) is designed to divide the flow (F1) cooperating with the pressure side (17) of the blade (7) into a flow (F3) along the duct (14) and cooperating with the further suction side (21); and a flow (F4) continuing along the further pressure side (20).

6. An aerodynamic appendix as claimed in any one of the foregoing Claims, wherein the duct (14) tapers towards the further suction side (21).

7. An aerodynamic appendix as claimed in any one of the foregoing Claims, and comprising at least one vortex generator (23) inside the duct (14).

8. An aerodynamic appendix as claimed in any one of the foregoing Claims, and comprising a further duct (24) in series with the duct (14).

9. An aerodynamic appendix as claimed in Claim 8, wherein the further duct (24) tapers towards the further suction side (21).

10. An aerodynamic appendix as claimed in Claim 8 or 9, wherein the further duct (24) is designed to divide the flow (F3) cooperating with the further pressure side (20) into a flow (F5) along the further duct (24) and cooperating with the further suction side (21) downstream from the further duct (24); and a flow (F6) continuing along the further pressure side (20).

11. An aerodynamic appendix as claimed in any one of Claims 8 to 10, and comprising a plurality of further ducts (24) arranged in parallel in flow-wise direction.

12. An aerodynamic appendix as claimed in any one of the foregoing Claims, and comprising a plurality of parallel ducts (14) arranged in parallel in flow-wise direction.

13. An aerodynamic appendix as claimed in any one of the foregoing Claims, and comprising a face (22) complementary with the outer surface of the blade (7) to which the aerodynamic appendix (8) is coupled.

14. An aerodynamic appendix as claimed in any one of the foregoing Claims, comprising a main body (28) coupled to the blade (7) and at least one flap (29; 30; 31) hinged to the main body (28).

15. An aerodynamic appendix as claimed in Claim 14, wherein the at least one flap (29; 30; 31) is hinged about an axis (B1; B2; B3).

16. An aerodynamic appendix as claimed in Claim 14 or 15, wherein the duct (14) is delimited by the main the body and the at least one flap (29; 30; 31).

17. An aerodynamic appendix as claimed in any one of Claims 14 to 16, comprising a plurality of flaps (29, 30, 31) hinged to the main body (28) about respective parallel and mutually offset axes (B1, B2, B3) and a plurality of duct (14), each, delimited by the main body (28) and one of the flaps (29, 30, 31).

18. A wind turbine blade, wherein the blade (7) comprises an outer portion (11) with an airfoil having a leading edge (15), a trailing edge (16), a pressure side (17), and a suction side (18); a substantially cylindrical inner portion (12); an intermediate portion (13) between the outer portion (11) and the inner portion (12) and shaped to form a transition between the airfoil and the substantially cylindrical inner portion; and an aerodynamic appendix (8) according to any one of the foregoing Claims.

## Patentansprüche

1. Aerodynamisches Anbauteil eines Windturbinenblatts, wobei das Blatt (7) Folgendes umfasst: einen Außenabschnitt (11) mit einem Profil, das eine Vorderkante (15), eine Hinterkante (16), eine Druckseite (17) und eine Saugseite (18) umfasst; einen im Wesentlichen zylindrischen Innenabschnitt (12); und einen Zwischenabschnitt (13), der zwischen dem Außenabschnitt (11) und dem Innenabschnitt (12) geformt ist, einen Übergang zwischen dem Profil und dem im Wesentlichen zylindrischen Innenabschnitt zu bilden; wobei das aerodynamische Anbauteil (8) ausgestaltet ist, sich an dem Innenabschnitt (12) und dem Zwischenabschnitt (13) zu befinden, umfassend eine weitere Hinterkante (19), eine weitere Druckseite (20), eine weitere Saugseite (21) und **dadurch gekennzeichnet, dass** es mindestens einen Kanal (14) umfasst, der die weitere Druckseite (20) strömungstechnisch mit der weiteren Saugseite (21) verbindet.

2. Aerodynamisches Anbauteil nach Anspruch 1, wobei die weitere Druckseite (20) ausgestaltet ist, in die Druckseite (17) des Blatts (7) überzugehen.

3. Aerodynamisches Anbauteil nach Anspruch 1 oder 2, wobei die weitere Saugseite (21) ausgestaltet ist, einen Winkel mit der Saugseite (18) des Blatts (7) zu bilden.

4. Aerodynamisches Anbauteil nach einem der vorhergehenden Ansprüche, wobei der Kanal (14) sich an dem gegenüberliegenden Ende der weiteren Hinterkante (19) befindet.

5. Aerodynamisches Anbauteil nach einem der vorhergehenden Ansprüche, wobei der Kanal (14) ausgestaltet ist, die mit der Druckseite (17) des Blatts (7) zusammenwirkende Strömung (F1) in eine entlang des Kanals (14) mit der weiteren Saugseite (21) zusammenwirkende Strömung (F3); und eine sich entlang der weiteren Druckseite (20) fortsetzende Strömung (F4) zu teilen.

6. Aerodynamisches Anbauteil nach einem der vorhergehenden Ansprüche, wobei der Kanal (14) sich in Richtung der weiteren Saugseite (21) verjüngt.

7. Aerodynamisches Anbauteil nach einem der vorhergehenden Ansprüche und umfassend mindestens einen Wirbelerzeuger (23) innerhalb des Kanals (14).

8. Aerodynamisches Anbauteil nach einem der vorhergehenden Ansprüche und umfassend einen weiteren Kanal (24) in Serie mit dem Kanal (14).

9. Aerodynamisches Anbauteil nach Anspruch 8, wobei der weitere Kanal (24) sich in Richtung der weiteren Saugseite (21) verjüngt.

10. Aerodynamisches Anbauteil nach Anspruch 8 oder 9, wobei der weitere Kanal (24) ausgestaltet ist, die mit der weiteren Druckseite (20) zusammenwirkende Strömung (F3) in eine entlang des weiteren Kanals (24) und mit der weiteren Saugseite (21) stromabwärts des weiteren Kanals (24) zusammenwirkende Strömung (F5); und eine sich entlang der weiteren Druckseite (20) fortsetzende Strömung (F6) zu teilen.

11. Aerodynamisches Anbauteil nach einem der Ansprüche 8 - 10 und umfassend eine Vielzahl von weiteren Kanälen (24), die parallel in Richtung der Strömung angeordnet sind.

12. Aerodynamisches Anbauteil nach einem der vorhergehenden Ansprüche und umfassend eine Vielzahl von parallelen Kanälen (14), die parallel in Richtung der Strömung angeordnet sind.

13. Aerodynamisches Anbauteil nach einem der vorhergehenden Ansprüche und umfassend eine mit der Außenfläche des Blatts (7) komplementäre Stirnseite (22), an die das aerodynamische Anbauteil (8) gekoppelt ist.

14. Aerodynamisches Anbauteil nach einem der vorhergehenden Ansprüche, umfassend einen Hauptkörper (28), der an das Blatt (7) gekoppelt ist und mindestens eine gelenkig an dem Hauptkörper (28) gelagerte Klappe (29; 30; 31).

15. Aerodynamisches Anbauteil nach Anspruch 14, wobei die mindestens eine Klappe (29; 30; 31) gelenkig um eine Achse (B1; B2; B3) gelagert ist.

16. Aerodynamisches Anbauteil nach Anspruch 14 oder 15, wobei der Kanal (14) durch den Hauptkörper und die mindestens eine Klappe (29; 30; 31) begrenzt ist.

17. Aerodynamisches Anbauteil nach einem der Ansprüche 14 - 16, umfassend eine Vielzahl von Klappen (29, 30, 31), die gelenkig an dem Hauptkörper (28) um jeweilige parallele und gegeneinander versetzte Achsen (B1, B2, B3) gelagert sind und eine Vielzahl von Kanälen (14), wobei jeder durch den Hauptkörper (28) und einen der Klappdeckel (29, 30, 31) begrenzt ist.

18. Windturbinenblatt, wobei das Blatt (7) Folgendes aufweist: einen Außenabschnitt (11) mit einem Profil, das eine Vorderkante (15), eine Hinterkante (16), eine Druckseite (17) und eine Saugseite (18) aufweist; einen im Wesentlichen zylindrischen Innenabschnitt (12); einen Zwischenabschnitt (13)zwischen dem Außenabschnitt (11) und dem Innenabschnitt (12) und der geformt ist, einen Übergang zwischen dem Profil und dem im Wesentlichen zylindrischen Innenabschnitt zu bilden; und ein aerodynamisches Anbauteil (8) nach einem der vorhergehenden Ansprüche.

## Revendications

1. Appendice aérodynamique de pale d'éolienne, dans lequel la pale (7) comprend une partie extérieure (11) pourvue d'une surface portante ayant un bord d'attaque (15), un bord de fuite (16), un côté sous pression (17) et un côté aspiration (18) ; une partie intérieure sensiblement cylindrique (12) ; et une partie intermédiaire (13) située entre la partie extérieure (11) et la partie intérieure (12) et conformée pour former une transition entre la surface portante et la partie intérieure sensiblement cylindrique ; l'appendice aérodynamique (8) étant configuré de manière à être situé au niveau de la partie intérieure (12) et de la partie intermédiaire (13), et comprenant un bord de fuite supplémentaire (19), un côté sous pression supplémentaire (20), un côté aspiration supplémentaire (21), et étant **caractérisé en ce qu'**il comprend au moins un conduit (14) reliant le côté sous pression supplémentaire (20) fluidiquement au côté aspiration supplémentaire (21).

2. Appendice aérodynamique selon la revendication 1, dans lequel le côté sous pression supplémentaire (20) est conçu pour se fondre avec le côté sous pression (17) de la pale (7).

3. Appendice aérodynamique selon la revendication 1 ou 2, dans lequel le côté aspiration supplémentaire (21) est conçu pour former un angle avec le côté aspiration (18) de la pale (7).

4. Appendice aérodynamique selon l'une quelconque des revendications précédentes, dans lequel le conduit (14) est situé à l'extrémité opposée au bord de fuite supplémentaire (19).

5. Appendice aérodynamique selon l'une quelconque des revendications précédentes, dans lequel le conduit (14) est conçu pour diviser le flux (F1) coopérant avec le côté sous pression (17) de la pale (7) en un flux (F3) le long du conduit (14) et coopérant avec le côté aspiration supplémentaire (21) ; et un flux (F4) le long du côté sous pression supplémentaire (20).

6. Appendice aérodynamique selon l'une quelconque des revendications précédentes, dans lequel le conduit (14) se rétrécit en direction du côté aspiration supplémentaire (21).

7. Appendice aérodynamique selon l'une quelconque des revendications précédentes, et comprenant au moins un générateur de vortex (23) à l'intérieur du conduit (14).

8. Appendice aérodynamique selon l'une quelconque des revendications précédentes, et comprenant en outre un conduit (24) en série avec le conduit (14).

9. Appendice aérodynamique selon la revendication 8, dans lequel le conduit supplémentaire (24) se rétrécit en direction du côté aspiration supplémentaire (21).

10. Appendice aérodynamique selon la revendication 8 ou 9, dans lequel le conduit supplémentaire (24) est conçu pour diviser le flux (F3) coopérant avec le côté sous pression supplémentaire (20) en un flux (F5) le long du conduit supplémentaire (24) et coopérant avec le côté aspiration supplémentaire (21) en aval du conduit supplémentaire (24) ; et un flux (F6) le long du côté sous pression supplémentaire (20).

11. Appendice aérodynamique selon l'une quelconque des revendications 8 à 10, comprenant en outre une pluralité de conduits (24) disposés en parallèle dans la direction des flux.

12. Appendice aérodynamique selon l'une quelconque des revendications précédentes, comprenant une pluralité de conduits parallèles (14) disposés en parallèle dans la direction des flux.

13. Appendice aérodynamique selon l'une quelconque des revendications précédentes, comprenant une face (22) complémentaire de la surface extérieure de la pale (7) à laquelle l'appendice aérodynamique (8) est accouplé.

14. Appendice aérodynamique selon l'une quelconque des revendications précédentes, comprenant un corps principal (28) accouplé à la pale (7) et au moins un volet (29 ; 30; 31) relié de façon articulée au corps principal (28).

15. Appendice aérodynamique selon la revendication 14, dans lequel l'au moins un volet (29 ; 30 ; 31) est articulé sur un axe (B1 ; B2 ; B3).

16. Appendice aérodynamique selon la revendication 14 ou 15, dans lequel le conduit (14) est délimité par le corps principal et l'au moins un volet (29 ; 30 ; 31).

17. Appendice aérodynamique selon l'une quelconque des revendications 14 à 16, comprenant une pluralité de volets (29, 30, 31) reliés de façon articulée au corps principal (28) sur des axes (B1, B2, B3) respectifs parallèles et décalées les uns par rapport aux autres et une pluralité de conduits (14) délimités chacun par le corps principal (28) et l'un des volets (29, 30, 31).

18. Pale d'éolienne, la pale (7) comprenant une partie extérieure (11) pourvue d'une surface portante ayant un bord d'attaque (IS), un bord de fuite (16), un côté sous pression (17) et un côté aspiration (18) ; une partie intérieure sensiblement cylindrique (12) ; une partie intermédiaire (13) située entre la partie extérieure (11) et la partie intérieure (12) et conformée pour former une transition entre la surface portante et la partie intérieure sensiblement cylindrique ; et un appendice aérodynamique (8) selon l'une quelconque des revendications précédentes.
